# EUROPEAN PATENT SPECIFICATION

(11) **EP 1 057 784 B1**
(45) Date of publication and mention of the grant of the patent: **02.11.2005**
(21) Application number: 00201924.8
(22) Date of filing: 30.05.2000
(51) Int. Cl.: C02F 1/00, C02F 1/72, C02F 1/76

(54) **Water purificaion plant**
Anlage zur Reinigung von Wasser
Station d'épuration des eaux

(30) Priority: 02.06.1999 NL 1012217
(43) Date of publication of application: 06.12.2000
(73) Proprietor: Appel, Peter Willem, 3062 DG Rotterdam (NL)
(72) Inventor: Appel, Peter Willem, 3062 DG Rotterdam (NL)
(74) Representative: Prins, Adrianus Willem

(56) References cited:
- EP-A- 0 027 278
- EP-A- 0 572 975
- DE-U- 9 415 140
- FR-A- 2 726 309
- US-A- 5 190 659
- US-A- 5 424 032
- DATABASE WPI Week 9913 Derwent Publications Ltd., London, GB; AN 1990-097109 XP002129977 "Cleaning water in swimming pool - by treating with hydrogen peroxide and UV light" & SE 8 802 180 A (EKA NOBEL AB), 11 December 1989 (1989-12-11)

## Description

The present invention relates to a water purification plant for a swimming pool as set forth in the preamble of Claim 1.

European Patent application No. 27278 discloses water purification plant for a swimming pool with a filtering circuit in which a filter, a pump and a UV reactor are incorporated, and with supply members for an oxidizing and disinfecting agent. The UV reactor serves to disinfect the pool water. Oxidizing agent is added after the UV reactor and serves to regenerate spent desinfectant. In fact, chlorine-donating components are specified as oxidising agent, thereby promoting the formation of undesired by-products. Similarly, French patent application No. 2726309 discloses a UV reactor for disinfecting pool water.

Typically, chlorine or chlorine compounds are added to the water in the swimming pool. Apart from acting as disinfectant, chlorine has an oxidizing action. It reacts both to humic acids in the make-up water, involving the formation of chlorinated organic hydrocarbons, and to organic components such as urea, creatinine and the like, introduced into the water by swimmers, involving the formation of chloramines. For that reason, apart from the amount of chlorine required for disinfecting, an additional amount of chlorine usually has to be added to compensate for the oxidizing or chlorinating action of the chlorine. In order to limit the addition of chlorine, because of the undesired formation of chlorinated organic hydrocarbons and chloramines, it has earlier been proposed to have the oxidation take place by means of ozone. Since this is a toxic gas whose remainders still have to be removed separately, the use thereof causes great problems in practice. Moreover, in that case, chlorine for disinfecting the pool water has to be added nevertheless.

Further, there is known a purification of pool water where the UV reactor is not incorporated in a separate parallel circuit, but in the filtering circuit, while, also, the organic components are oxidized by means of hydrogen peroxide, while disinfection is effected by means of the UV reactor. Although at high concentrations, hydrogen peroxide may serve as oxidizing and disinfecting agent, and a UV reactor would even be superfluous, such high concentrations in the swimming pool water are highly undesirable, in particular for swimmers. However, at low concentrations, insufficient oxidation as well as insufficient disinfection takes place. A possible solution could be provided by causing the residence time of the circulating water in a hydrogen peroxide reactor incorporated in the filtering circuit to be very long and causing the residence time in the swimming pool to be very short. However, this meets with practical drawbacks, since such hydrogen peroxide reactor would have to be particularly large, which would involve unacceptably high costs.

The use of the combination of a UV reactor and ozone as oxidant in a water purification plant is also known per se. In that case, air is fed into the UV reactor, from which, under the influence of the UV radiation, ozone is obtained in situ; the ozonized air is passed through the water flowing through the UV reactor. However, the oxidizing action hereof proves to be very slight. The object of the invention is to remove the above-mentioned drawbacks, or at least to reduce them to a considerable extent, and to provide a water purification plant wherein, in an efficient manner, both an oxidation of organic compounds introduced into the water and a sufficient disinfection of the water is obtained, while this no longer requires the addition of chlorine or other undesired substances in high concentrations, although this may in fact be desired sometimes, in particular in the case of an insufficient disinfection.

To realize this object, in a first embodiment, the water purification plant as described in the preamble is characterized by the characterizing part of claim 1.

The oxidant is introduced into the UV reactor into the water flowing through this reactor. This can take place in the UV reactor itself, but also in the further circuit therefor, i.e. after the division in the filtering circuit. This may involve the addition of an excess of oxidant to the water; indeed, because the water, after having passed through the further conduit, is mixed with the water from the filtering circuit, while the oxidant concentration can be substantially reduced by dilution, swimmers will yet not be troubled by the added oxidant. Preferably, an oxidant is used whose oxidizing action is promoted under the influence of UV radiation.

Further advantages of the water purification plant according to the invention reside in the fact that the discharged water contains fewer chlorinated compounds, which renders the various organic compounds more readily biodegradable, while, further, less make-up water needs to be added. These advantages mean a lesser burden to the environment.

Instead of passing in situ-formed ozone through the water, which yields a poor oxidation, a direct supply of an oxidant to the water is particularly favorable. In that respect, it is important that the oxidant be water-soluble, i.e. sufficiently soluble to effect an efficient oxidation.

In particular, on the outlet side of the filter, a distribution element is present, via which a fraction (1-α) of the pool water, wherein α lies approximately in the interval of from 0.03 to 0.5, more in particular from 0.05 to 0.2, and is preferably about 0.1, is directly returned over the filter conduit to the swimming pool and the rest of the pool water is returned to the swimming pool over the further circuit with the UV reactor. By subjecting, for instance, only 0.1 of the amount of circulated water to a direct oxidation, a very high concentration of oxidant can be introduced into the further circuit. After that, a dilution with 0.9 part of the circulated water takes place.

Further, it is particularly favorable when in the further circuit, on the inlet side of the UV reactor, make-up water is introduced. Indeed, when make-up water has to be added, as is necessary in practice, this will preferably take place where the high concentration of oxidant is added, because of the humic acids present in the make-up water.

As stated, through the features according to the invention, high concentrations of oxidant can be used without swimmers in the pool being troubled thereby. The concentration of active oxygen equivalents of the added oxidant will then be higher than the concentration of active oxygen equivalents of oxidizable organic compounds which is averagely introduced into the pool water by make-up water and by swimmers. In this respect, it is favorable when the concentration of active oxygen equivalents of the added oxidant (which can, for instance, be determined by means of potassium permanganate) is higher by a factor 2 to 100 and in particular 2 to 20, than the concentration of active oxygen equivalents of oxidizable organic compounds which is averagely introduced into the pool water by make-up water and by swimmers. In this manner, due to the high concentration of the oxidant in the second filtering circuit, an optimal oxidation of the oxidizable organic compounds introduced into the pool water is obtained, while this process proceeds considerably faster than in the case where the UV reactor were included in the first filtering circuit and the oxidant were injected therein. Further, in connection with the set UV radiation intensity, a disinfection (bacteriological equilibrium situation) can be realized.

Preferably, the oxidizing and disinfecting agent is formed by a peroxide compound, in particular hydrogen peroxide. Moreover, additionally, to meet any legal requirements concerning a prescribed degree of disinfection, a disinfectant, such as chlorine, all types of chlorine compounds and silver salts, etc., can further be added via means present for that purpose.

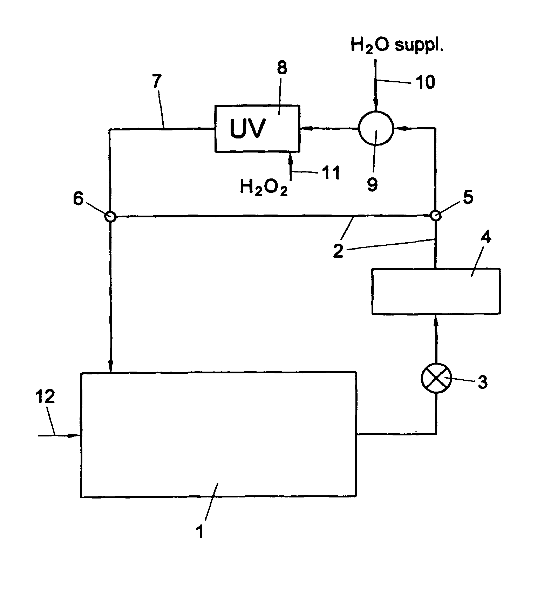

The invention will be specified with reference to the accompanying Figure, which schematically shows the water purification plant according to the invention.

The Figure shows a swimming pool 1 having a filtering circuit 2 incorporating a pump 3 and a filter 4. Arranged parallel to a part of this filtering circuit 2, via distributing elements 5 and 6, is a further circuit 7, which circuit 7 incorporates a UV reactor 8 and means 9 for the supply of make-up water over the conduit 10. The UV reactor 8 comprises an injector via which an oxidant, supplied over a conduit 11, is introduced into the water flowing through the UV reactor. As oxidant, hydrogen peroxide is opted for. Further, the arrow 12 indicates the conduit via which an additional amount of a disinfectant can be added to the swimming pool water.

### Example:

It is assumed that via the distributing element, 0.1 part of the circulated amount of water is passed through the circuit 7 and 0.9 part hereof is passed through the filtering circuit 2.

When it is assumed that averagely, per swimmer, about 2 m³ should be circulated over a day of 8 hours, and that per day, 500 swimmers use the swimming pool, the total water circulation flow rate is 125 m³/hour, so that the flow rate of the water flowing through the circuit 7 is 12.5 m³/hour and that of the water that is directly returned to the pool is 112.5 m³/hour.

If it is further assumed that averagely, not considering the supply of make-up water, about 0.2 g of active oxygen equivalents of oxidizable organic compounds is introduced into the water per swimmer over a day of 8 hours, this is about 12.5 g/hour for 500 swimmers per day. This means that in the UV reactor, at least 1 g/m³ of oxidizable organic compounds has to be oxidized in order to keep the concentration thereof in the pool constant. Through the addition of an excess of hydrogen peroxide at the inlet of the UV reactor, for instance 10-20 g/hour, there is realized at the inlet of the UV reactor a hydrogen peroxide concentration of 10-20 g/m³ or 10-20 mg/liter - assuming that no notable decomposition of hydrogen peroxide takes place in the further circuit and the pool - and a virtually optimal oxidation of the oxidizable organic compounds introduced into the water by the swimmers proves to be possible in about 0.5 hour, while the concentration of the hydrogen peroxide in the swimming pool is sufficiently low for the swimmers not to be troubled thereby. To achieve a disinfecting situation under these conditions, apart from the amount of hydrogen peroxide required for optimal oxidation of said organic compounds, a relatively slight amount of chlorine should be added. Typically, this is even prescribed by law. Upon decomposition of hydrogen peroxide in the further circuit and in the pool, a compensation should be provided therefor in the dosing of the hydrogen peroxide.

The invention is in no way limited to the embodiment represented hereinabove, which shows the water purification plant only schematically, and not to the exemplary embodiment here described. The invention comprises all possible modifications hereof, of course in so far as they fall within the protective scope of the following claims.

## Claims

1. A water purification plant for a swimming pool (1), provided with a filtering apparatus having
- a filtering circuit (2) arranged to circulate water from the swimming pool (1), the filtering circuit comprising a filter (4) and a pump (3),
- a UV reactor;
- supply members (11, 12) for an oxidizing and disinfecting agent, **characterized in that** the filtering apparatus comprises a further circuit (7) which is arranged in parallel to at least a part of the filtering circuit (2), so that water flows in parallel through the further circuit (7) and said at least part of the filtering circuit (2), the further circuit comprising a UV reactor (8),and **in that** the supply member (11) for the oxidizing agent is arranged to introduce the oxidizing agent in the further filtering circuit (7) into the water flowing through said UV reactor (8).

2. A water purification plant according to claim 1, **characterized in that** on the outlet side of the filter (4) a distribution element (5) is present, coupled to the swimming pool (1) and the further filtering circuit (2) so that a fraction of the filtered pool water is directly returned from the distribution element (5) over a filter conduit to the swimming pool, and a remainder of the pool water will be returned from the distribution element (5) to the swimming pool (1) via the further filtering circuit (7) through the UV reactor (8).

3. A water purification plant according to claim 2, wherein said fraction lies between 0.5 and 0.97.

4. A water purification plant according to any one of the preceding claims, **characterized in that** the pump (3) is arranged in series with a parallel arrangement of the further filtering circuit (7) and the at least part of the filtering circuit (2) that runs in parallel with the further filtering circuit.

5. A water purification plant according to any one of the preceding claims, **characterized in that** a conduit (10) for the introduction of make-up water is coupled to the further filtering circuit (7) on the inlet side of the UV reactor (8).

6. A method of purifying swimming pool water with a purification plant according to Claim 1, the method comprising:
- pumping water through a filtering circuit (2),
- disinfecting the water with a UV reactor (8) in the further filtering circuit, **characterized in that** the water is pumped through a further filtering circuit (7), that is arranged in parallel to at least a part of the filtering circuit and **in that** oxidizing agent for treating the water is introduced in the further circuit into water flowing through said UV reactor (8), but not through said at least a part of the filtering circuit.

7. A method according to claim 6, **characterized in that** the oxidizing agent is a peroxide compound.

8. A method according to any one of claims 6 or 7, wherein a concentration of active oxygen equivalents of the added oxidant is higher than a concentration of active oxygen equivalents of oxidizable organic compounds which is averagely introduced into the swimming pool water by make-up water and swimmers.

9. A method according to any one of claims 6 or 7, wherein the concentration of active oxygen equivalents of the added oxidant is higher by a factor between 2 and 100 than a concentration of active oxygen equivalents of oxidizable organic compounds which is averagely introduced into the swimming pool water by make-up water and swimmers.

## Patentansprüche

1. Wasserreinigungsanlage für einen Swimmingpool (1), versehen mit einer Filtervorrichtung mit
- einem Filterkreislauf (2), der zum zirkulierenden Bewegen von Wasser aus dem Swimmingpool (1) ausgebildet ist, wobei der Filterkreislauf einen Filter (4) und eine Pumpe (3) aufweist,
- einem UV-Reaktor;
- Zuführelementen (11,12) für ein Oxidations- und ein Desinfizierungsmittel,
**dadurch gekennzeichnet, dass** die Filtervorrichtung einen weiteren Kreislauf (7) aufweist, der parallel zu mindestens einem Teil des Filterkreislaufs (2) angeordnet ist, derart, dass Wasser parallel durch den weiteren Kreislauf (7) und den genannten Mindest-Teil des Filterkreislaufs (2) strömt, wobei der weitere Kreislauf einen UV-Reaktor (8) aufweist, und dass das Zuführteil (11) für das Oxidationsmittel derart angeordnet ist, dass es das in dem weiteren Filterkreislauf (7) befindliche Oxidationsmittel in das durch den UV-Reaktor (8) strömende Wasser einführt.

2. Wasserreinigungsanlage nach Anspruch 1, **dadurch gekennzeichnet, dass** an der Auslass-Seite des Filters (4) ein Verteilungselement (5) vorhanden ist, das mit dem Swimmingpool (1) und dem weiteren Filterkreislauf (7) derart verbunden ist, dass ein Anteil des gefilterten Pool-Wassers direkt von dem Verteilungselement (5) über eine Filterleitung zu dem Swimmingpool rückgeleitet wird und ein Rest des Pool-Wassers aus dem Verteilungselement (5) über den weiteren Filterkreislauf (7) durch den UV-Reaktor (8) zu dem Swimmingpool (1) rückgeleitet wird.

3. Wasserreinigungsanlage nach Anspruch 2, bei dem der besagte Anteil 0,5 bis 0,97 beträgt.

4. Wasserreinigungsanlage nach einem der vorhergehenden Ansprüche, **dadurch gekennzeichnet, dass** die Pumpe (3) in Reihe mit einer parallelen Anordnung des weiteren Filterkreislaufs (7) und des Mindest-Teils des Filterkreislaufs (2), der parallel zu dem weiteren Filterkreislauf verläuft, angeordnet ist.

5. Wasserreinigungsanlage nach einem der vorhergehenden Ansprüche, **dadurch gekennzeichnet, dass** eine Leitung (10) für die Einführung von Zusatzwasser mit dem weiteren Filterkreislauf (7) an der Einlass-Seite des UV-Reaktors (8) verbunden ist.

6. Verfahren zum Reinigen von Swimmingpool-Wasser mittels einer Wasserreinigungsanlage nach Anspruch, mit folgenden Schritten:
- Pumpen von Wasser durch einen Filterkreislauf (2),
- Desinfizieren des Wassers mittels eines UV-Reaktors (8) in dem weiteren Filterkreislauf,
**dadurch gekennzeichnet, dass** das Wasser durch einen weiteren Filterkreislauf (7) gepumpt wird, der parallel zu mindestens einem Teil des Filterkreislaufs angeordnet ist, und dass in dem weiteren Filterkreislauf ein zum Behandeln des Wassers vorgesehenes Oxidationsmittel in Wasser eingeführt wird, das durch den UV-Reaktor (8), jedoch nicht durch den genannten Mindest-Teil des Filterkreislaufs (2) strömt.

7. Verfahren nach Anspruch 6, **dadurch gekennzeichnet, dass** das Oxidationsmittel eine Peroxid-Verbindung ist.

8. Verfahren nach einem der Ansprüche 6 oder 7, bei dem die Konzentration aktiver Sauerstoff-Äquivalente des hinzugegebenen Oxidationsmittels höher ist die durchschnittliche Konzentration aktiver Sauerstoff-Äquivalente oxidationsfähiger organischer Verbindungen, die durch Füllwasser und Schwimmer in das Swimmingpool-Wasser eingeführt wird.

9. Verfahren nach einem der Ansprüche 6 oder 7, bei dem die Konzentration aktiver Sauerstoff-Äquivalente des hinzugegebenen Oxidationsmittels um einen Faktor 2 bis 100 höher ist die durchschnittliche Konzentration aktiver Sauerstoff-Äquivalente oxidationsfähiger organischer Verbindungen, die durch Füllwasser und Schwimmer in das Swimmingpool-Wasser eingeführt wird.

## Revendications

1. Installation d'épuration d'eau pour une piscine (1), pourvue d'un appareil de filtration ayant
- un circuit de filtration (2) disposé pour faire circuler l'eau provenant de la piscine (1), le circuit de filtration comprenant un filtre (4) et une pompe (3),
- un réacteur aux UV ;
- des éléments d'introduction (11, 12) pour un agent oxydant et désinfectant,
**caractérisée en ce que** l'appareil de filtration comprend un circuit supplémentaire (7) qui est disposé en parallèle à au moins une partie du circuit de filtration (2), de façon à ce que l'eau circule en parallèle dans le circuit supplémentaire (7) et dans ladite au moins une partie du circuit de filtration (2), le circuit de filtration supplémentaire comprenant un réacteur aux UV (8) et **en ce que** l'élément d'introduction (11) pour l'agent oxydant est disposé de façon à introduire l'agent oxydant dans le circuit de filtration supplémentaire (7) dans l'eau circulant dans ledit réacteur aux UV (8).

2. Installation d'épuration d'eau selon la revendication 1, **caractérisée en ce que** du côté de la sortie du filtre (4) est présent un élément de distribution (5), relié à la piscine (1) et au circuit de filtration supplémentaire (2) de façon à ce qu'une fraction de l'eau de piscine filtrée soit directement renvoyée à partir de l'élément de distribution (5) par une canalisation du filtre vers la piscine et un reste de l'eau de piscine soit renvoyé de l'élément de distribution (5) vers la piscine (1) via le circuit de filtration supplémentaire (7) en passant par le réacteur aux UV (8).

3. Installation d'épuration d'eau selon la revendication 2, dans laquelle ladite fraction est comprise entre 0,5 et 0,97.

4. Installation d'épuration d'eau selon l'une quelconque des revendications précédentes, **caractérisée en ce que** la pompe (3) est disposée en série avec un arrangement en parallèle du circuit de filtration supplémentaire (7) et de l'au moins une partie du circuit de filtration (2) qui va en parallèle avec le circuit de filtration supplémentaire.

5. Installation d'épuration d'eau selon l'une quelconque des revendications précédentes, **caractérisée en ce qu'**une canalisation (10) pour l'introduction d'eau d'appoint est reliée au circuit de filtration supplémentaire (7) du côté de l'entrée du réacteur aux UV (8).

6. Procédé d'épuration d'eau de piscine avec une installation d'épuration selon la revendication 1, le procédé comprenant :
- de pomper de l'eau pour la faire passer dans un circuit de filtration (2),
- de désinfecter l'eau avec un réacteur aux UV (8) dans le circuit de filtration supplémentaire,
**caractérisé en ce que** l'eau est pompée pour la faire passer dans un circuit de filtration supplémentaire (7), qui est disposé en parallèle à au moins une partie du circuit de filtration et **en ce que** l'agent oxydant pour traiter l'eau est introduit dans le circuit de filtration supplémentaire dans l'eau circulant dans ledit réacteur aux UV (8), mais pas dans ladite au moins une partie du circuit de filtration.

7. Procédé selon la revendication 6, **caractérisé en ce que** l'agent oxydant est un composé peroxyde.

8. Procédé selon l'une quelconque des revendications 6 ou 7, dans lequel une concentration en équivalents d'oxygène actif de l'oxydant ajouté est supérieure à une concentration en équivalents d'oxygène actif de composés organiques oxydables qui est introduite en moyenne dans l'eau de la piscine par l'eau d'appoint et les baigneurs.

9. Procédé selon l'une quelconque des revendications 6 ou 7, dans lequel la concentration en équivalents d'oxygène actif de l'oxydant ajouté est supérieure d'un facteur compris entre 2 et 100 à une concentration en équivalents d'oxygène actif de composés organiques oxydables qui est introduite en moyenne dans l'eau de la piscine par l'eau d'appoint et les baigneurs.
